Europäisches Patentamt

European Patent Office

Office européen des brevets

(19)

(11) Veröffentlichungsnummer: **0 284 870 B1**

(12) **EUROPÄISCHE PATENTSCHRIFT**

(45) Veröffentlichungstag der Patentschrift: **10.07.91**

(51) Int. Cl.5: **A01C 7/10, A01D 69/10**

(21) Anmeldenummer: **88104050.5**

(22) Anmeldetag: **15.03.88**

Teilanmeldung 90109752.7 eingereicht am 15/03/88.

(54) **Verteilmaschine.**

(30) Priorität: **25.03.87 DE 3709526**

(43) Veröffentlichungstag der Anmeldung:
**05.10.88 Patentblatt 88/40**

(45) Bekanntmachung des Hinweises auf die
Patenterteilung:
**10.07.91 Patentblatt 91/28**

(84) Benannte Vertragsstaaten:
**DE FR GB IT NL**

(56) Entgegenhaltungen:
**DE-U- 7 434 244**
**FR-A- 2 567 716**
**US-A- 4 068 452**

(73) Patentinhaber: **Amazonen-Werke H. Dreyer
GmbH & Co. KG
Am Amazonenwerk 9-13
W-4507 Hasbergen-Gaste(DE)**

(72) Erfinder: **Gattermann, Bernd
Eichenwall 3
W-2872 Hude 1(DE)**
Erfinder: **Siefken, Claus
Preussenweg 27
W-2872 Hude 1(DE)**
Erfinder: **Feldhaus, Werner
Huntloser Strasse 25
W-2879 Gevershausen(DE)**

## Beschreibung

Die Erfindung betrifft eine Bestellkombination gemäß des Oberbegriffes des Anspruches 1.

Durch das deutsche Gebrauchsmuster 74 34 244 (Fig. 7 und 8) ist eine Bestellkombination, bestehend aus einem Bodenbearbeitungsgerät und einer Sämaschine mit einer Bremsvorrichtung für die Walze bekannt. Diese Bremsvorrichtung wird erst durch eine Relativbewegung zwischen der Walze und einem Nachlaufgerät wirksam, so daß beim Ausheben nicht sofort die Drehbewegung der Walze beendet wird. Es wird also nicht sofort das Ausbringen von Saatgut bei Beginn des Aushebens beendet. Weiterhin ist nachteilig, daß nur bei einem entsprechend hohem Ausheben der Bestellkombination die Bremvorrichtung wirksam wird, d.h. daß Nachlaufgerät muß vom Boden freikommen.

Wenn diese Bestellkombination, die über Dreipunktkupplungselemente an den Dreipunktkraftheber eines Schleppers angekuppelt ist, am Feldende nach einer Ausbringüberfahrt nicht hoch genug ausgehoben wird, drehen sich die Walzenelemente aufgrund ihrer Trägheit noch weiter, so daß die Dosierorgane den Ausbringelementen weiterhin Material zuführen. Hierdurch wird am Feldende beim Wenden sehr viel Material jeweils einfach vergeudet. Dieses Problem tritt nicht nur bei Bestellkombination auf, deren Fahrwerk als Walzenkörper ausgebildet ist, sondern auch bei Maschinen, deren Dosierorgane von Laufrädern angetrieben werden. Vermehrt werden in neuerer Zeit immer größer und breiter werdende Räder verwendet, so daß aufgrund der großen Trägheitskräfte dieser großen Räder beim Abheben vom Boden, ohne daß die Vorwärtsbewegung vor dem Ausheben der Maschine unterbrochen ist, sich die Räder weiterdrehen, so daß noch weiter Material ausgebracht wird.

Das bedeutet also, daß diese geschilderte Problematik bei allen Verteilmaschinen, deren Dosierorgane von auf dem Boden abrollenden Antriebsrädern angetrieben werden, besteht. Diese auf dem Boden abrollenden Antriebsräder können als Laufräder, Grummireifen, Walzen verschiedenster Ausführung etc. ausgebildet werden. Dies bedeutet also, daß die Erfindung sich mit Verteilmaschinen beschäftigt, deren Dosierorgane einen "Bodenradantrieb" aufweisen.

Der Erfindung liegt die Aufgabe zugrunde, bei Sämaschinen von Bestellkombinationen mit "Bodenradantrieb" eine sofortige Unterbrechung des Ausbringens von Material am Ende einer Ausbringbahn zu gewährleisten.

Diese Aufgabe wird erfindungsgemäß durch das Kennzeichen des Anspruches 1 gelöst.

Infolge dieser Maßnahme werden die die Dosierorgane antreibenden Räder oder Walzen am Ende einer Ausbringüberfahrt sofort über die Bremseinrichtung in einfacher Weise abgebremst, so daß in überraschend einfacher Weise unmittelbar bei Beendigung des Ausbringvorganges, auch wenn die Räder oder Walzen während der unterbrochenen Vorwärtsbewegung vom Boden abgehoben werden, sofort unterbrochen wird, so daß die Räder sich nicht mehr drehen. Hierdurch werden die Dosierorgane nicht weiter angetrieben, so daß kein Material mehr ausgebracht werden kann.

Desweiteren wird gewährleistet, daß automatisch beim Abheben der Räder oder Walzen vom Boden die Bremseinrichtung wirksam wird, so daß die Räder oder Walze automatisch abgebremst werden. In einfacher Weise sind die Betätigungselemente der Bremseinrichtung mit den Unterlenkern verbunden, so daß sich eine sehr einfache Ausbildung der Bremseinrichtung bzw. eine sehr einfache Betätigungsmöglichkeit ergibt.

Eine sehr einfache Ausbildung der Bremseinrichtung wird erfindungsgemäß dadurch erreicht, daß die Bremseinrichtung aus einem zweiarmigen, schwenkbar gelagerten Hebel besteht, daß die eine Seite des Hebels einen Mitnehmer aufweist, der mit den Unterlenkern der Maschine zusammenwirkt, daß die andere Seite des Hebels eine Kufe aufweist, die im ausgehobenen Zustand der Reifen oder Walze auf den Reifen oder die Walze drückbar ist, und so die Räder oder Walze abbremst und/oder festhält. Somit kann also mittels eines einfachen Hebels, der mit den Aushebeteilen der Maschinenteile zusammenwirkt, eine sehr einfach ausgebildete Bremseinrichtung geschaffen werden.

Bei einer Sämaschine, die über vorzugsweise als Dreipunktkupplung ausgebildete Kupplungselemente an den Schlepperkraftheber ankuppelbar ist und/oder Bestandteil einer an den Schlepperkraftheber ankuppelbaren aus Bodenbearbeitungsgerät und Sämaschine bestehenden Bestellkombination ist, ist erfindungsgemäß vorgesehen, daß zumindest in dem Bereich eines Unterlenkers der Dreipunktkupplung ein als doppelarmiger Hebel ausgebildeter Bremshebel angeordnet ist, daß der Hebel, vorzugsweise mittels des Unterlenkeranschlußbolzens, an der Sämaschine schwenkbar gelagert ist, daß in einem Abstand von dem Unterlenkeranschlußbolzen ein Mitnehmer an dem Hebel angeordnet ist, daß der dem Mitnehmer abgewandte Hebelarm des doppelarmigen Hebels sich oberhalb der Umlauffläche des Reifens oder der Walze befindet, und daß der Unterlenker gegenüber der Sämaschine in begrenztem Umfang höhenbeweglich angeordnet ist. Infolge dieser Maßnahmen wird bei einer Sämaschine, die unmittelbar an den Dreipunktkraftheber eines Schleppers oder Bestandteil einer an den Schlepperkraftheber ankuppelbaren Bestellkombination ist, eine äußerst einfache und sehr schnell wirksame Bremseinrichtung geschaffen, mit der automatisch beim Ausheben der Sämaschine die die Dosierorgane antreibenden Räder oder Walzen abgebremst und festgehalten werden.

Des weiteren ist erfindungsgemäß vorgesehen, daß der auf den Reifen oder die Walze drückende Teil des als Bremseinrichtung ausgebildeten Hebels zumindest teilweise federnd ausgebildet ist. Infolge der federnden Ausbildung des Hebels wird einerseits gewährleistet, daß in jedem Falle der Hebel mit einer ausreichend großen Kraft gegen den Reifen oder die Walze gedrückt wird, damit diese Teile sicher abgebremst und festgehalten werden, und andererseits wird durch die federnde Ausbildung des Hebels gewährleistet, daß Freiwege der Betätigungselemente ausgeglichen werden.

Die weiteren Einzelheiten der Erfindung sind den übrigen Unteransprüchen, der Beispielsbeschreibung und den Zeichnungen zu entnehmen. Hierbei zeigen

Fig. 1     eine erfindungsgemäße Bestellkombination, bestehend aus einem zapfwellenangetriebenen Bodenbearbeitungsgerät mit einer Nachlaufwalze und einer aufgesattelten Sämaschine in der Seitenansicht,

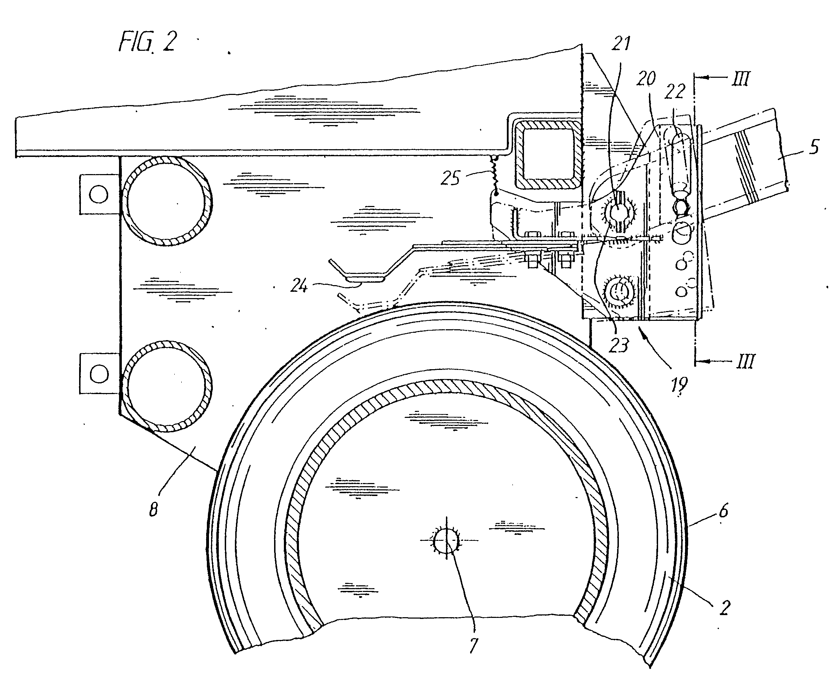

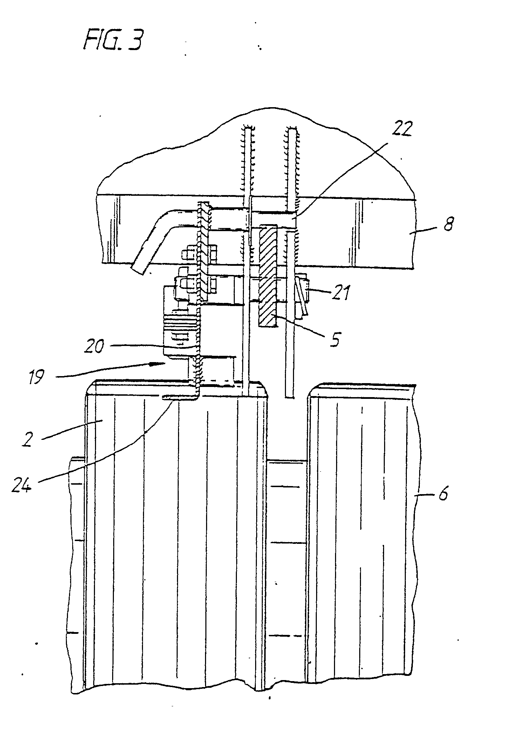

Fig. 2     die erfindungsgemäße Bremseinrichtung entsprechend der Bestellkombination gemäß Fig. 1 in Seitenansicht und vergrößeter Darstellung und

Fig. 3     die Bremseinrichtung gemäß Fig. 2 in der Ansicht III - III.

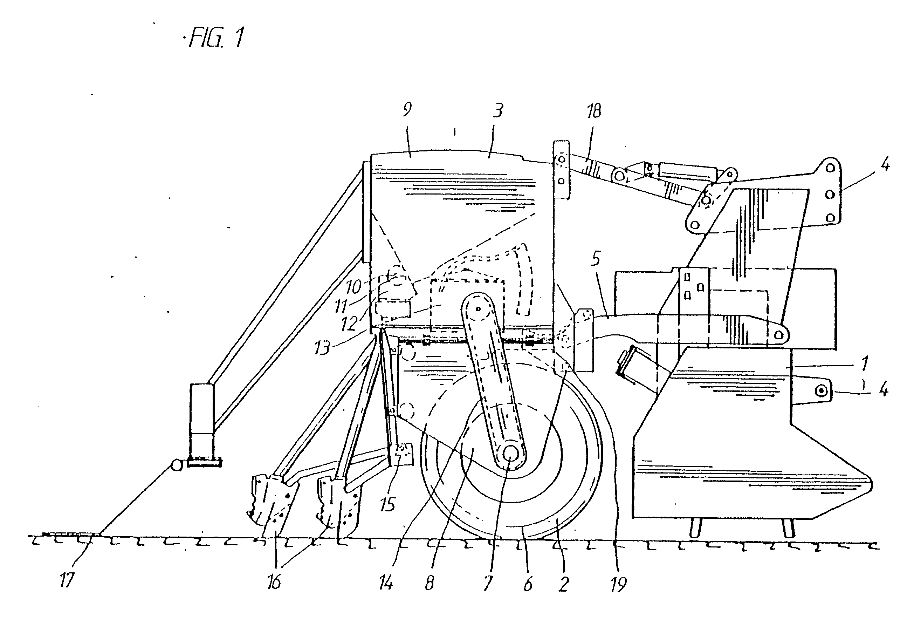

Die Bestellkombination gemäß Fig. 1 besteht aus der als Kreiselegge 1 ausgebildeten zapfwellenangetriebenen Bodenbearbeitungsmaschine 1, der Nachlaufwalze 2 sowie der auf die Nachlaufwalze 2 aufgesattelten Sämaschine 3. Die Kreiselegge 1 ist über die Dreipunktkupplungselemente in bekannter Weise an den Dreipunktkraftheber eines Ackerschleppers anzuordnen. Von der Zapfwelle des Ackerschleppers wird über eine Gelenkwelle in bekannter und daher nicht dargestellter Weise die Kreiselegge 1 angetrieben. Hinter der Kreiselegge 1 ist die Nachlaufwalze 2 über die beiden Unterlenker 5 angekuppelt. Die Nachlaufwalze 2 besteht aus nebeneinander angeordneten Gummireifen 6. Die Nachlaufwalze 2 ist mit ihren Wellenenden 7 in dem Rahmen 8, an dem die Unterlenker 5 angeschlossen sind, drehbar gelagert. Auf dem Rahmen 8 der Nachlaufwalze 2 ist die Drillmaschine 3 aufgesattelt. Die Drillmaschine 3 weist den Vorratsbehälter 9 auf. In dem unteren Bereich des Vorratsbehälters 9 sind die Dosierorgane 10 angeordnet. Die Dosierorgane 10 sind auf einer Säwelle 11 drehfest gelagert. Die Säwelle 11 ist in den Sägehäusen 12 drehbar gelagert. Die Säwelle 11 mit den Dosierrädern 10 wird über das Regelgetriebe 13 und über den Kettentrieb 14 von der Nachlaufwalze 2, also über einen "Bodenradantrieb", angetrieben. Hinter der Nachlaufwalze 2 sind an der Scharhalteschiene 15 die Säschare 16 angeordnet. Hinter den Säscharen 16 ist dann der Saatstriegel 17 angebracht. Den Säscharen 16 wird über die Dosierräder 10 das sich im Vorratsbehälter 9 befindliche Saatgut in einstellbaren Mengen zugeführt.

Des weiteren ist zwischen dem Rahmen der Sämaschine 3 und dem Rahmen der Kreiselegge 1 der Oberlenker 18 angeordnet. Wenn die Kreiselegge 1 von dem Schlepperkraftheber ausgehoben wird, so wird gleichzeitig die Sämaschine 3 mit ausgehoben, da sie über die beiden Unterlenker 5 und den Oberlenker 18 mit dem Kreiselgrubber derart verbunden ist, daß sie ausgehoben werden kann. Die Unterlenker 5 und der Oberlenker 18 sind derart angeordnet, daß die Kreiselegge 1 und die Sämaschine 3 sich während des Betriebes, d.h. während der Bodenbearbeitung durch die Kreiselegge 1 und dem Abrollen der Nachlaufwalze 2 auf dem von der Kreiselegge 1 bearbeiteten Boden und dem Einbringen des Saatgutes durch die Säschare 16 auf dem Boden gegeneinander in der Höhe bewegen können.

Im Bereich eines der beiden Unterlenker ist an dem Rahmen der Nachlaufwalze 2 die Bremseinrichtung 19 angeordet. Die Bremseinrichtung 19 wirkt auf die Reifen 6 der Nachlaufwalze 2 ein, wenn die Bestellkombination von dem Schlepperkraftheber am Ende einer Ausbringüberfahrt vom Boden abgehoben wird. Die Bremseinrichtung 19 besteht aus dem zweiarmigen Hebel 20. Der Hebel 20 ist mittels des Unterlenkeranschlußbolzens 21 an dem Rahmen 8 der Nachlaufwalze 2 schwenkbar gelagert. Der Hebel 20 weist auf der einen Seite des Hebels den Mitnehmerbolzen 22 auf. Der Hebel 20 ist somit um den Unterlenkeranschlußbolzen 21 schwenkbar gelagert. Mit dem Unterlenkeranschlußbolzen 21 ist der Unterlenker 5 an dem Rahmen 8 der Sämaschine angeordnet. Der Unterlenker 5 weist das Langloch 23, durch den der Bolzen 21 gesteckt ist, auf, so daß der Unterlenker 5 gegenüber dem Rahmen 8 der Nachlaufwalze bzw. der Sämaschine höhenbeweglich ist. Die andere Seite des Hebels weist die Kufe 24 auf, die im ausgehobenen Zustand der Reifen oder der Walze bzw. der Sämaschine gegen einen der Reifen 6 der Nachlaufwalze 2 gedrückt wird. Hierdurch wird der Reifen bzw. die Walze 2 abgebremst und festgehalten. In der ausgehobenen Position der Sämaschine d.h., wenn der Ausbringvorgang unterbrochen ist, nimmt der Hebel 20 bzw. die Kufe 24 die mit strichpunktierten Linien eingezeichnete Position ein, d.h. die Kufe 24 ist gegen den Reifen 6 der Nachlaufwalze 2 gedrückt. Während des Ausbringvorganges, d.h., wenn die Sämaschine bzw. die gesamte Bestellkombination auf dem Boden abgesenkt ist und das im Vorratsbehälter 9 der Sämaschine 30 befindliche Saatgut über die Säschare 16 in den Boden eingebracht wird, wird der Hebel 20 durch die Zugfeder 25 in die mit durchzogenen Linien dargestellte Position gehalten. Der Teil des Hebels 20, an dem sich die Kufe 24 befindet, ist federnd ausgebildet. Dadurch, daß die Kufe 24 der Bremsvorrichtung gegen den Reifen 6 der Nachlaufwalze 2 gedrückt wird, wird sichergestellt, daß die Nachlaufwalze sich nach dem Abheben vom Boden, d.h. nach dem Ausheben der Bestellkombination nicht mehr weiter drehen kann, so daß somit selbstverständlich auch nicht mehr über das Regelgetriebe 13 die Dosierorgane 10 angetrieben werden können. Hierdurch ist in jedem Falle sichergestellt, daß sofort nach Beendigung des Ausbringvorganges, d.h. nach dem Ausheben der Bestellkombination kein Saatgut mehr den Säscharen 16 zugeführt wird.

## Ansprüche

1. Bestellkombination, bestehend aus einem Bodenbearbeitungsgerät (1) und einer Sämaschine (3) mit einem Vorratsbehälter (9), Dosierorganen (10) und Unterlenkeranschlußbolzen (21), wobei die Sämaschine (3) über einen Oberlenker (18) und Unterlenker (5) an das Bodenbearbeitungsgerät (1) angekuppelt ist, wobei die Dosierorgane (10) von auf dem Boden abrollenden Rädern (6) oder Walzen (2) antreibbar sind und wobei an der Sämaschine (3) eine auf Räder (6) oder Walzen (2) einwirkbare Bremseinrichtung (19) angeordnet ist, welche über Betätigungselemente (22) betätigbar ist, dadurch gekennzeichnet, daß die Betätigungselemente (22) der Bremseinrichtung (19) mit den Unterlenkeranschlußbolzen (21) der Sämaschine schwenkbar verbunden sind und mit den Unterlenkern (5) der Bestellkombination zusammenwirken, und daß die Unterlenker (5) höhenbewegbar an der Sämaschine (3) angeordnet sind.

2. Bestellkombination nach Anspruch 1, dadurch gekennzeichnet, daß die Bremseinrichtung (19) aus einem zweiarmigen, schwenkbar gelagerten Hebel (20) besteht, daß die eine Seite des Hebels (20)) einen Mitnehmer (22) aufweist, der mit den Unterlenkern (5) der Maschine zusammenwirkt, daß die andere Seite des Hebels eine Kufe (24) aufweist, die auf den Reifen (6) oder die Walze (2) drückbar ist.

3. Bestellkombination nach Anspruch 1, dadurch gekennzeichnet, daß zumindest in dem Bereich eines Unterlenkers (5) der Dreipunktkupplung ein als doppelarmiger Hebel (20) ausgebildeter Bremshebel angeordnet ist, daß der Hebel, vorzugsweise mittels des Unterlenkeranschlußbolzens (21), an der Sämaschine (3) schwenkbar gelagert ist, daß in einem Abstand von dem Unterlenkeranschlußbolzen (21) ein Mitnehmer (22) an dem Hebel (20) angeordnet ist, daß der dem Mitnehmer (22) abgewandte Hebelarm des doppelarmigen Hebels (20) sich oberhalb der Umlauffläche des Reifens (6) oder der Walze (2) befindet, und daß der Unterlenker (5) gegenüber der Sämaschine (3) in begrenztem Umfang höhenbeweglich angeordnet ist.

4. Bestellkombination nach Anspruch 1 oder 3, dadurch gekennzeichnet, daß der auf den Reifen (6) oder die Walze (2) drückende Teil (24) des als Bremseinrichtung (19) ausgebildeten Hebels (20) zumindest teilweise federnd ausgebildet ist.

5. Bestellkombination nach Anspruch 1 oder 3, dadurch gekennzeichnet, daß an der Bremseinrichtung (19) eine Feder (25) zum Abheben des Hebels (20) von dem Reifen (6) oder der Walze (2) angeordnet ist.

## Claims

1. A combine cultivator comprising a soil cultivator implement (1) and a seed drill (3) with a hopper (9), metering units (10) and lower guide connector bolts (21), the seed drill (3) being coupled via an upper guide (18) and lower guides (5) to the soil cultivator implement (1), the metering units (10) being drivable by wheels (6) or rollers (2) rolling on the ground, and a braking device (19) acting on wheels (6) or rollers (2) being located on the seed drill (3), said braking device (19) being actuable by actuating elements (22), characterised in that the actuating elements (22) of the braking device (19) are connected pivotally to the lower guide connector bolts (21) of the seed drill and cooperate with the lower guides (5) of the combine cultivator, and that the lower guides (5) are located on the seed drill (3) so as to be vertically movable.

2. A combine cultivator according to Claim 1, characterised in that the braking device (19) comprises a two-armed pivotally-mounted lever (20), that one end of the lever (20) has an entrainment means (22) cooperating with the lower guides (5) of the machine, and that the other end of the lever has a skid (24) which can be pressed against the tyre (6) or the roller (2).

3. A combine cultivator according to Claim 1, characterised in that, at least in the region of one lower guide (5) of the three-link coupling, there is located a brake lever designed as a double-armed lever (20), that the lever is mounted pivotally on the seed drill (3), preferably by means of the lower guide connector bolt (21), that, at a spacing from the lower guide connector bolt (21), there is located an entrainment means (22) on the lever (20), that the lever arm of the double-armed lever (20) facing away from the entrainment means (22) is located above the rotating surface of the tyre (6) or of the roller (2), and that the lower guide (5) is located so as to be vertically movable to a restricted degree relative to the seed drill (3).

4. A combine cultivator according to Claim 1 or 3, characterised in that the portion (24) of the lever (20) designed as a braking device (19) pressing against the tyre (6) or the roller (2) is at least partly resilient in design.

5. A combine cultivator according to Claim 1 or 3, characterised in that there is located on the braking device (19) a spring (25) for lifting the lever (20) from the tyre (6) or roller (2).

**Revendications**

1. Combiné agricole constitué par un appareil de travail du sol (1) et une machine d'ensemencement (3) avec un réservoir (9), des organes de dosage (10) et des boulons de raccordement (21) des bielles inférieures, combiné dans lequel la machine à ensemencer (3) est accouplée à l'appareil de travail du sol (1) par l'intermédiaire d'une bielle supérieure (18) et de bielles inférieures (5), les organes de dosage (10) étant susceptibles d'être entraînés par des roues (6) ou des rouleaux (2) roulant sur le sol, et un dispositif de freinage (19) susceptible d'agir sur les roues (6) ou les rouleaux (2) étant disposé sur la machine à ensemencer (3), ce dispositif étant susceptible d'être actionné par des éléments de manoeuvre (22), combiné agricole caractérisé en ce que les éléments de manoeuvre (22) du dispositif de freinage (19) sont reliés de façon à pouvoir pivoter sur les goujons de raccordement (21) des bielles inférieures de la machine à ensemencer, et coopèrent avec les bielles inférieures (5) du combiné agricole, et en ce que les bielles inférieures (5) sont disposées sur la machine à ensemencer (3) de façon à pouvoir se déplacer en hauteur.

2. Combiné agricole selon la revendication 1 caractérisé en ce que le dispositif de freinage (19) est constitué par un levier à deux bras (20) monté de façon à pouvoir osciller, un côté de ce levier (20) comportant un organe d'entraînement (22) qui coopère avec les bielles inférieures (5) de la machine, et en ce que l'autre côté du levier comporte un patin (24) qui est susceptible d'être pressé sur les pneus (6) ou bien les rouleaux (2).

3. Combiné agricole selon la revendication 1, caractérisé en ce qu'un levier de frein réalisé sous la forme d'un levier à deux bras (20), est disposé tout au moins un voisinage d'une bielle inférieure (5) de l'accouplement à trois points, en ce que ce levier est monté sur la machine d'ensemencement (3) de façon à pouvoir pivoter, de préférence au moyen du boulon de raccordement (21) de la bielle inférieure, en ce qu'à une certaine distance du boulon de raccordement (21) un organe d'entraînement (22) est disposé sur le levier (20), en ce que le bras de levier, opposé à l'organe d'entraînement (22), du levier à deux bras (20) se trouve au-dessus de la surface de roulement du pneu (6) ou du rouleau (2), et en ce que la bielle inférieure (5) est disposée par rapport à la machine à ensemencer (3) de façon à pouvoir se déplacer en hauteur dans une étendue limitée.

4. Combiné agricole selon la revendication 1 ou la revendication 3, caractérisé en ce que la partie (24), appuyant sur le pneu (6) ou le rouleau (2), du levier (20) constituant le dispositif de freinage (19) est tout au moins partiellement élastique.

5. Combiné agricole selon la revendication 1 ou la revendication 3, caractérisé en ce qu'un ressort (25) est prévu sur le dispositif de freinage (19) pour soulever le levier (20) du pneu (6) ou du rouleau (2).

FIG. 1

EP 0 284 870 B1

FIG. 2

FIG. 3